# EUROPÄISCHE PATENTSCHRIFT

(11) **EP 3 004 562 B1**
(45) Veröffentlichungstag und Bekanntmachung des Hinweises auf die Patenterteilung: **31.05.2017**
(21) Anmeldenummer: 14752585.1
(22) Anmeldetag: 05.08.2014
(51) Int. Cl.: F01D 11/08, F01D 11/14, F01D 25/28, F01D 11/12

(54) **EINSATZELEMENT, RINGSEGMENT, GASTURBINE, MONTAGEVERFAHREN**
INSERT ELEMENT AND GAS TURBINE
ELÉMENT D'INSERTION ET TURBINE À GAZ

(30) Priorität: 09.08.2013 EP 13179889
(43) Veröffentlichungstag der Anmeldung: 13.04.2016
(73) Patentinhaber: Siemens Aktiengesellschaft, 80333 München (DE)
(72) Erfinder: AHMAD, Fathi, 41564 Kaarst (DE); HÄNDLER, Michael, 40699 Erkrath (DE); KAMPKA, Kevin, 45478 Mülheim a. d. Ruhr (DE); KOWALSKI, Christian, 46147 Oberhausen (DE); KOWALZIK, Christian, 13353 Berlin (DE); KURT, Nihal, 40231 Düsseldorf (DE); SCHMITT, Stefan, 45481 Mülheim an der Ruhr (DE); SCHRÖDER, Peter, 45307 Essen (DE)
(86) Internationale Anmeldenummer: PCT/EP2014/066842
(87) Internationale Veröffentlichungsnummer: WO 2015/018839

(56) Entgegenhaltungen:
- EP-A1- 2 613 015
- US-A1- 2004 047 725
- US-A1- 2004 120 803
- US-A1- 2010 054 932
- US-A1- 2011 044 805

## Beschreibung

Die vorliegende Erfindung betrifft eine Gasturbine und ein Montageverfahren.

Es ist bekannt und weit verbreitet, dass Laufschaufelreihen von Turbinen von Gasturbinen am oberen Ende der Schaufelblätter ein sogenanntes Deckband aufweisen.

Die US 2004/047725 A1 zeigt ein Ringsegment einer Ringform, welche um den äußeren Umfang von Laufschaufeln einer Gasturbine angeordnet ist. Das Ringsegment umfasst einen Schaufelring, eine Hauptwelle und Laufschaufeln mit mehreren Einzeleinheiten, welche eine Ringform dadurch definieren, dass sie um die Umfangsrichtung der Hauptwelle arrangiert sind, und so angeordnet sind, dass deren innere Umfangsfläche in konstantem Abstand zu den Spitzen der Laufschaufeln geführt ist. Dabei sind Vertiefungen, die sich entlang der Axialrichtung der Hauptwelle der Turbine erstrecken, von den Einzeleinheiten so ausgebildet, dass sie sich gegenseitig gegenüberstehen. Das Ringsegment umfasst zudem eine Dichtplatte, welche in jedem gegenüberliegenden Paar der Vertiefungen eingesetzt ist, sodass die angrenzenden Paare der Einzeleinheiten miteinander verbunden sind, und Kontaktflächen, welche an Positionen radial weiter nach innen als die Dichtplatten gebildet sind und sich in Axialrichtung und Umfangsrichtung erstrecken und sich gegenseitig berühren.

Die US 2011/044805 A1 offenbart ein Kühlsystem eines Ringsegments einer Gasturbine Das Kühlsystem umfasst eine Aufprallplatte, die mehrere kleine Löcher hat, einen Kühlraum, der durch die Aufprallplatte und einen Hauptkörper eines Segmentkörpers eingeschlossen ist, einen ersten Hohlraum, der in einer stromabwärtigen Endposition des Segmentkörpers in Strömungsrichtung des Verbrennungsgases angeordnet ist, sodass er senkrecht zu einer Axialrichtung einer Rotationswelle steht, einen ersten Kühlkanal, der mit dem Kühlraum und dem ersten Hohlraum in Verbindung steht, und einem zweiten Kühlkanal, der mit dem ersten Hohlraum und einem Brennraum in Verbindung steht, der in einer in Strömungsrichtung des Verbrennungsgases stromabwärtigen Endposition des Segmentkörpers angeordnet ist.

Aus der US 2004/120803 A1 ist ein gekühltes Turbinenkranzsegment für eine Gasturbine bekannt, welches ein axial verlaufendes Deckbandringsegment mit einer Innenfläche, einer Außenfläche, einem stromaufwärtigen Flansch und einem stromabwärtigen Flansch umfasst. Die Flansche halten den Deckbandring in einem Motorgehäuse. Eine perforierte Kühlluftaufprallplatte ist auf der Außenfläche des Deckbandrings zwischen dem stromaufwärtigen und dem stromabwärtigen Flansch angeordnet, mit einer zwischen der Prallplatte und der Außenfläche definierten Aufprallkammer. Axial verlaufende Kühlbohrungen in dem Ringsegment erstrecken sich zwischen der Prallkammer und einem Auslass. Eine an den Auslass angrenzende Mulde leitet Kühlluft von dem Auslass in Richtung einer stromabwärtigen Leitschaufel, um die Leitschaufel zu kühlen.

Durch das Deckband ist es bei Eingriffen an der Laufschaufelreihe, die beispielsweise zu Instandhaltungs oder Erprobungszwecken erfolgen, notwendig, ein sogenanntes Cover-Lift, also ein Abheben des kompletten oberen Gehäuseteils, vorzunehmen. Ein Cover-Lift ist mit großem Aufwand verbunden.

Der vorliegenden Erfindung liegt die Aufgabe zugrunde, diese Nachteile zu beheben und ein Einsatzelement, ein Ringsegment, eine Gasturbine sowie ein Montageverfahren bereitzustellen, sodass es möglich ist, auch eine Laufschaufelreihe ohne Deckband in der Gasturbine zu betreiben.

Gelöst wird diese Aufgabe mit einer Gasturbine nach Anspruch 1 sowie einem Montageverfahren nach Anspruch 6 gelöst.

Vorteilhafte Weiterbildungen der Erfindung sind in den Unteransprüchen angegeben und in der Beschreibung beschrieben.

Erfindungsgemäß ist bei einer Gasturbine mit mehreren Laufschaufelreihen vorgesehen, dass bei derjenigen Laufschaufelreihe, bei der es sich um die stromabwärts der anderen Laufschaufelreihen gelegene handelt, ein darum herum angeordneten Ring aus mehreren Ringsegmenten vorgesehen ist, von denen zumindest eines einen Ringsegmentkörper und ein Einsatzelement umfasst, wobei das Einsatzelement zum Abdecken einer Aussparung eines Ringsegmentkörpers einer Turbine einer Gasturbine weist eine konkav geformte Vorderseite und eine Rückseite mit einem Rückseitenprofil auf. Das Rückseitenprofil entspricht einer Negativform eines Aussparungsprofils einer Aussparung. Die Aussparung ist dabei an einer Heißgasseite des Ringsegmentkörpers angeordnet. Der Ringsegmentkörper ist durch die Aussparung für einen Betrieb mit einer ein Deckband aufweisenden Laufschaufelreihe ausgebildet.

Dabei ist weiterhin vorgesehen, dass das Einsatzelement im montierten Zustand des Ringsegmentkörpers in der Turbine in den Heißgaspfad verbringbar und anschließend an den Ringsegmentkörper anbringbar ist.

Mit dieser Anordnung ist es vorteilhaft ermöglicht eine Gasturbine von einem Betrieb mit einer Laufschaufelreihe mit Deckband auf einen Betrieb mit einer Laufschaufelreihe ohne Deckband umzurüsten ohne dafür neue Ringsegmente einsetzen zu müssen. Ein aufwendiger Cover-Lift bleibt dadurch erspart. Auch eine aufwendige Neuanfertigung passender Ringsegmente kann erspart bleiben.

Damit ist vorteilhaft eine Gasturbine bereitgestellt, die für einen Betrieb mit einer Laufschaufelreihe ohne Deckband geeignet ist. Bei einem Austausch der Laufschaufeln braucht nicht das obere Gehäuse der Gasturbine abgehoben zu werden (Cover-Lift). Ein Zugang von der Auslassseite her genügt. Die erfindungsgemäße Gasturbine eignet sich damit insbesondere für Versuchszwecke, bei denen häufiger Änderungen an den Schaufelblättern vorgenommen werden. Mit der vorliegenden Gasturbine könne diese Versuche erheblich schneller aufgebaut und durchgeführt werden.

Zudem kann die erfindungsgemäße Gasturbine in einfacher Weise für den Betrieb mit einer Laufschaufelreihe mit Deckband umgerüstet werden, indem das zumindest eine Einsatzelement vom Ringsegmentkörper entfernt wird.

Dadurch, dass das Rückseitenprofil im Wesentlichen der Negativform des Aussparungsprofils entspricht, kann das Einsatzelement einfach, schnell und genau an dem Ringsegmentkörper positioniert werden, bevor es befestigt wird. Die Montage des Einsatzelements ist dadurch vereinfacht und mit weniger Aufwand möglich.

In einer vorteilhaften Ausgestaltung des erfindungsgemäßen Einsatzelements weist das Einsatzelement zumindest einen von der Vorderseite zur Rückseite verlaufenden Kanal auf.

Damit kann das Einsatzelement mit zumindest einem entsprechenden Befestigungsmittel, wie einer Schraube oder einem Bolzen, in einfacher Weise an dem Ringsegmentkörper befestigt werden.

In einer weiteren vorteilhaften Ausgestaltung des erfindungsgemäßen Einsatzelements weist das Einsatzelement zumindest eine koaxial zum Kanal angeordnete Senkung an der Vorderseite auf.

Das Befestigungsmittel zur Befestigung des Einsatzelements, insbesondere der Kopf einer Schraube, kann in der Senkung angeordnet sein um nicht aus der Kontur des Eisatzelements herauszustehen.

In einer weiteren vorteilhaften Ausgestaltung des erfindungsgemäßen Einsatzelements weist der Kanal eine Ausbuchtung auf.

Die Ausbuchtung ist im Gegensatz zur Senkung nicht an der Vorderseite des Einsatzelements angeordnet, sondern im Inneren des Einsatzelements. Die Querschnittsfläche des Kanals ist dadurch an der Vorderseite und an der Rückseite kleiner als im Bereich der Ausbuchtung.

Bolzen beziehungsweise Schrauben zur Montage des Einsatzelements können von der Seite zugeführt werden. Ihre Köpfe stehen nicht aus der Kontur des Einsatzelements heraus. In Richtung der Vorderseite kann ein Formschluss zwischen Bolzen und Einsatzelement hergestellt werden, was insbesondere bei einer Überkopfmontage ein Herausrutschen des Bolzens verhindert. Die Montage des Einsatzelements an dem Ringsegmentkörper ist dadurch vereinfacht.

In einer weiteren vorteilhaften Ausgestaltung des erfindungsgemäßen Einsatzelements ist im Kanal ein Bolzen angeordnet, der einen in die Ausbuchtung ragenden Kopf aufweist.

Damit ist der Bolzen formschlüssig in dem Einsatzelement angeordnet. Bei der Montage des Einsatzelements am Ringsegmentkörper braucht der Bolzen nicht extra zugeführt und positioniert werden. Die Montage ist dadurch weiter vereinfacht.

Das erfindungsgemäße Ringsegment einer Turbine einer Gasturbine umfasst einen Ringsegmentkörper mit einer in montiertem Zustand einem Heißgaspfad zugewandten Heißgasseite. Der Ringsegmentkörper weist an der Heißgasseite eine Aussparung auf. In der Aussparung ein Einsatzelement der zuvor beschriebenen Art angeordnet.

Das Ringsegment ist damit für einen Betrieb einer Laufschaufelreihe ausgebildet, die kein Deckband aufweist.

Das erfindungsgemäße Einsatzelement ist bevorzugt in einer Gasturbine integriert.

Bei dem erfindungsgemäßen Montageverfahren wird ein Einsatzelement an einer Aussparung eines Ringsegmentkörpers einer Turbine einer Gasturbine angebracht. Die Aussparung ist dabei an einer Heißgasseite angeordnet, die in montiertem zustand des Ringsegmentkörpers einem Heißgaspfad der Gasturbine zugewandt ist. Insbesondere wird das Einsatzelement im montierten Zustand des Ringsegmentkörpers in den Heißgaspfad verbracht und anschließend an den Ringsegmentkörper angebracht.

Damit kann ein Ringsegment einer Gasturbine insbesondere für Testzwecke mit geringem Aufwand von einer Auslegung für einen Betrieb mit einer Laufschaufelreihe mit Deckband in eine Auslegung für einen Betrieb mit einer Laufschaufelreihe ohne Deckband umgerüstet werden. Auch ein Zurückbau ist leicht möglich.

Ausführungsbeispiele der Erfindung werden anhand der Zeichnungen und der nachfolgenden Beschreibung näher erläutert. Es zeigen:
- Figur 1: eine erfindungsgemäße Gasturbine,
- Figur 2: ein erfindungsgemäßes Ringsegment,
- Figur 3: ein erfindungsgemäßes Einsatzelement und
- Figur 4: das erfindungsgemäße Einsatzelement in einer weiteren Ausgestaltung.

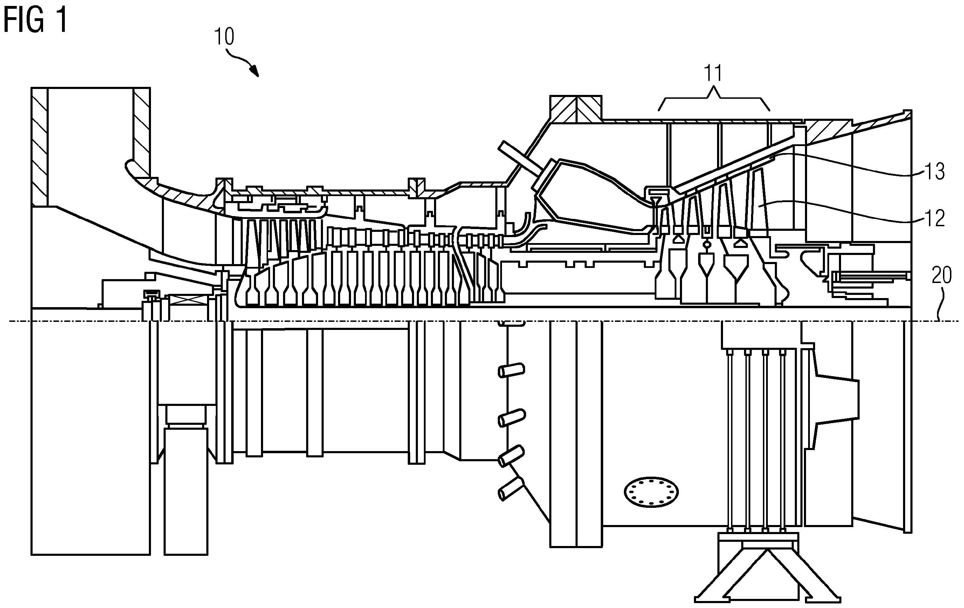

In der Figur 1 ist eine erfindungsgemäße Gasturbine 10 in einer beispielhaften Ausgestaltung skizziert. Die Gasturbine 10 umfasst eine Turbine 11 in der wenigstens eine Laufschaufelreihe 12 angeordnet ist. Um diese Laufschaufelreihe 12 herum ist ein Ring aus mehreren Ringsegmenten angeordnet. Die Laufschaufelreihe 12 ist um eine Rotationsachse 20 drehbar angeordnet.

Bei der Laufschaufelreihe 12 handelt es sich insbesondere um die stromabwärts der anderen Laufschaufelreihen gelegene. In der Figur 1 ist die entsprechende Laufschaufelreihe 12 die vierte Laufschaufelreihe der Turbine 11 der Gasturbine 10.

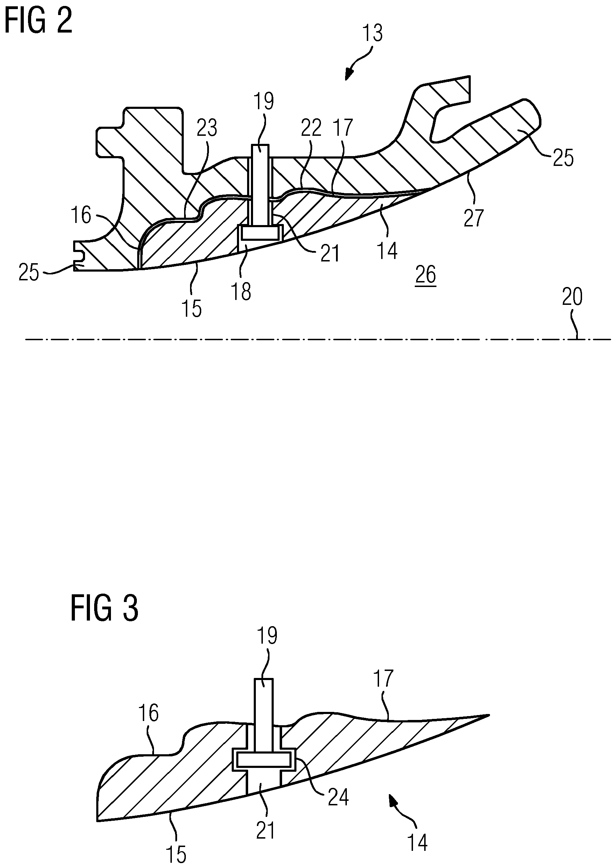

Die erfindungsgemäße Gasturbine 10 weist wenigstens ein erfindungsgemäßes Ringsegment 13 auf. In der Figur 2 ist das Ringsegment 13 in einer beispielhaften Ausgestaltung in einer Schnittdarstellung skizziert.

Das Ringsegment 13 umfasst einen Ringsegmentkörper 24 und ein erfindungsgemäßes Einsatzelement 14.

Der Ringsegmentkörper 25 umfasst eine Heißgasseite 27. Die Heißgasseite 27 ist in montiertem Zustand zu einem Heißgaspfad 26 der Gasturbine 10 gerichtet.

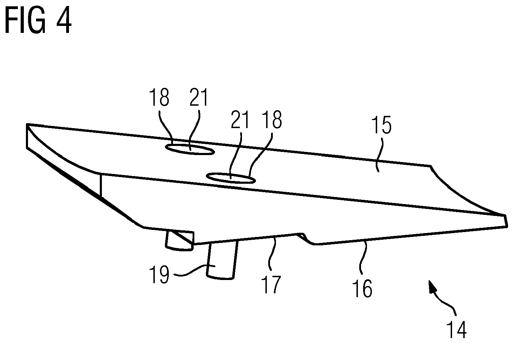

Das Einsatzelement 14 ist in der Figur 2 in einer ersten beispielhaften Ausgestaltung und in der Figur 3 in einer weiteren beispielhaften Ausgestaltung in einer Schnittdarstellung skizziert. In der Figur 4 ist das Einsatzelement 14 in einer Einzeldarstellung gezeigt.

Das erfindungsgemäße Einsatzelement 14 ist ausgebildet, eine Aussparung 23 in dem Ringsegmentkörper 25 abzudecken. Diese Aussparung 23 besitzt der Ringsegmentkörper 25 für den Betrieb der Gasturbine 10 mit einer Laufschaufelreihe, die ein Deckband aufweist. Um beispielsweise in einer Erprobungsphase nicht die gesamte obere Gehäusehälfte der Gasturbine abnehmen zu müssen (Cover-Lift) ist es vorteilhaft, die Laufschaufelreihe 12 ohne Deckband zu verwenden. Mittels des erfindungsgemäßen Einsatzelements 14 kann der Ringsegmentkörper 25 an die Laufschaufelreihe 12, die kein Deckband aufweist, angepasst werden.

Die Anpassung erfolgt durch ein erfindungsgemäßes Montageverfahren, bei dem das Einsatzelement 14 an der Aussparung 23 angebracht wird. Insbesondere kann dies erfolgen, während der Ringsegmentkörper 25 bereits in der Gasturbine 10 montiert ist. Dazu wird das Einsatzelement 14 in den Heißgaspfad 26 verbracht und anschließend an dem Ringsegmentkörper 25 angebracht.

Das Einsatzelement 14 weist eine Rückseite 16 und eine konkav geformte Vorderseite 15 auf. Die Vorderseite 15 ist im montierten Zustand dem Heißgaspfad 26 zugewandt. Die Rückseite 16 weist ein Rückseitenprofil 17 auf. Dieses Rückseitenprofil 17 entspricht im Wesentlichen der Negativform eines Aussparungsprofils 22 der Aussparung 23. In der Figur 2 gezeigten Ausgestaltung füllt das Einsatzelement 14 die Aussparung nahezu komplett aus. Das Einsatzelement 14 ist insbesondere derart gestaltet, dass es den Ringsegmentkörper 25 in zumindest drei Punkten berührt. Bei einer Montage ist dadurch eine sichere und schnelle Positionierung ermöglicht.

Das Einsatzelement 14 weist bevorzugt zumindest einen von der Vorderseite 15 zur Rückseite 16 verlaufenden Kanal 21 auf. Der Kanal 21 dient der Befestigung des Einsatzelements 14 an dem Ringsegmentkörper 25. Mittel zum Befestigen des Einsatzelements 14 werden dabei durch den Kanal 21 geführt. In den Figuren 3 bis 4 sind Bolzen 19 als Befestigungsmittel gezeigt. Die Bolzen 19 sind insbesondere Gewindebolzen oder Schrauben. Das Einsatzelement 14 ist in montiertem Zustand fest mit dem Ringsegmentkörper 25 verbunden. Das Einsatzelement 14 schließt im montierten Zustand bevorzugt bündig mit dem Ringsegmentkörper 25 ab.

Die Vorderseite 15 des Einsatzelements 14 ist konkav ausgeführt und damit den um die Laufschaufelreihe 12 herum angeordneten Ringsegmenten 13 angepasst. Im montierten Zustand ist die konkave Krümmung der Vorderseite 15 quer zur Rotationsachse 20 ausgebildet.

Das Einsatzelement 14 kann eine koaxial zum Kanal 21 angeordnete Senkung 18 an der Vorderseite 15 aufweisen. In einer solchen Ausgestaltung ist das Einsatzelement 14 in der Figur 2 gezeigt. Der Bolzen 19 zur Befestigung des Einsatzelements 14, insbesondere der Kopf einer Schraube, kann in der Senkung 18 angeordnet sein um nicht aus der Kontur des Eisatzelements 14 herauszustehen.

Es ist auch möglich, dass der Kanal 21 des Einsatzelements 14 eine Ausbuchtung 24 aufweist. In einer solchen Ausgestaltung ist das Einsatzelement 14 in der Figur 3 gezeigt. Die Ausbuchtung 24 ist insbesondere koaxial zum Kanal 12 angeordnet. Im Unterschied zur Senkung 18 ist die Ausbuchtung 24 nicht an der Vorderseite 15, sondern im Inneren des Einsatzelements 14 angeordnet. An der Vorderseite 15 und an der Rückseite 16 weist der Kanal 21 dabei jeweils eine Querschnittsfläche auf, die kleiner ist als die Querschnittsfläche des Kanals 21 innerhalb der Ausbuchtung 24. Der von der Vorderseite 15 bis zur Ausbuchtung 24 reichende Abschnitt des Kanals 21 dient dann beispielsweise dem Einführen eines Werkzeugs zum Drehen des Bolzens 19 bei der Montage.

Der Bolzen 19 kann erfindungsgemäß Bestandteil des Einsatzelements 14 sein und in der Weise im Kanal 21 angeordnet, dass sein Kopf in die Ausbuchtung 24 ragt. Der Bolzen 19 ist dadurch formschlüssig im Kanal 21 angeordnet und kann weder zur Vorderseite 15 noch zur Rückseite 16 hin aus dem Kanal 21 heraus bewegt werden.

Durch die Montage des Einsatzelements 14 an dem Ringsegmentkörper 25 ist ein erfindungsgemäßes Ringsegment 13 hergestellt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, der durch die angehängten Ansprüche definiert wird.

## Patentansprüche

1. Gasturbine (10) mit einer eine Laufschaufelreihe (12) und einen um die Laufschaufelreihe (12) herum angeordneten aus mehreren Ringsegmenten aufgebauten Ring aufweisenden Turbine (11),
wobei sich die Laufschaufelreihe (12) um die stromabwärts der anderen Laufschaufelreihen gelegene handelt und wobei zumindest ein Ringsegment (13) einen Ringsegmentkörper (25) mit einer in montiertem Zustand einem Heißgaspfad (26) zugewandten Heißgasseite (27) sowie ein Einsatzelement (14) zum Abdecken der Aussparung (23) eines Ringsegmentkörpers (25) einer Turbine (11) einer Gasturbine (10) umfasst, wobei der Ringsegmentkörper (25) an der Heißgasseite (27) eine Aussparung (23) aufweist und in der Aussparung (23) das Einsatzelement (14) angeordnet ist,
wobei das Einsatzelement (14) eine konkav geformte Vorderseite (15) und eine Rückseite (16) mit einem Rückseitenprofil (17) aufweist und das Rückseitenprofil (17) einer Negativform eines Aussparungsprofils (22) der Aussparung (23) entspricht
**dadurch gekennzeichnet, dass**
das Einsatzelement (14) im montierten Zustand des Ringsegmentkörpers (25) in der Turbine in den Heißgaspfad (26) verbringbar und anschließend an den Ringsegmentkörper (25) anbringbar ist.

2. Gasturbine (10) nach Anspruch 1,
wobei das Einsatzelement (14) zumindest einen von der Vorderseite (15) zur Rückseite (16) verlaufenden Kanal (21) aufweist.

3. Gasturbine (10) nach Anspruch 2,
wobei das Einsatzelement (14) zumindest eine koaxial zum Kanal (21) angeordnete Senkung (18) an der Vorderseite (15) aufweist.

4. Gasturbine (10) nach Anspruch 2,
wobei der Kanal (21) eine Ausbuchtung (24) aufweist.

5. Gasturbine (10) nach Anspruch 4,
wobei im Kanal (21) ein Bolzen (19) angeordnet ist, der einen in die Ausbuchtung ragenden Kopf aufweist.

6. Montageverfahren, bei dem ein Einsatzelement (14) an einer Aussparung (23) eines Ringsegmentkörpers (25) einer Turbine (11) einer Gasturbine (10) angebracht wird, wobei die Aussparung (23) an einer in montiertem Zustand des Ringsegmentkörpers (25) einem Heißgaspfad (26) der Gasturbine (10) zugewandten Heißgasseite (27) angeordnet ist, **gekennzeichnet durch** den Schritt, dass das Einsatzelement (14) im montierten Zustand des Ringsegmentkörpers (25) in den Heißgaspfad (26) verbracht wird und anschließend an den Ringsegmentkörper (25) angebracht wird.

## Claims

1. Gas turbine (10) with a turbine (11) having a rotor blade row (12) and a ring that is arranged around the rotor blade row (12) and is made up of multiple ring segments, wherein the rotor blade row (12) is the row situated downstream of the other rotor blade rows and
wherein at least one ring segment (13) comprises a ring segment body (25) having a hot gas side (27) which, in the mounted state, is oriented toward a hot gas path (26), and also comprises an insert element (14) for covering the recess (23) of a ring segment body (25) of a turbine (11) of a gas turbine (10),
wherein the ring segment body (25) has a recess (23) on the hot gas side (27) and the insert element (14) is arranged in the recess (23),
wherein the insert element (14) has a concave front side (15) and a rear side (16) with a rear side profile (17) and the rear side profile (17) corresponds to a negative shape of a recess profile (22) of the recess (23),
**characterized in that**,
in the mounted state of the ring segment body (25) in the turbine, the insert element (14) can be introduced into the hot gas path (26) and can then be fixed to the ring segment body (25).

2. Gas turbine (10) according to Claim 1,
wherein the insert element (14) has at least one passage (21) running from the front side (15) to the rear side (16).

3. Gas turbine (10) according to Claim 2,
wherein the insert element (14) has, on the front side (15), at least one depression (18) arranged coaxially with the passage (21).

4. Gas turbine (10) according to Claim 2,
wherein the passage (21) has a convexity (24).

5. Gas turbine (10) according to Claim 4,
wherein in the passage (21) there is arranged a bolt (19) which has a head protruding into the convexity.

6. Mounting method, in which an insert element (14) is fixed to a recess (23) of a ring segment body (25) of a turbine (11) of a gas turbine (10), wherein the recess (23) is arranged on a hot gas side (27) which, in the mounted state of the ring segment body (25), is oriented toward a hot gas path (26) of the gas turbine (10), **characterized by** the step that, in the mounted state of the ring segment body (25), the insert element (14) is introduced into the hot gas path (26) and is then fixed to the ring segment body (25).

## Revendications

1. Turbine ( 10 ) à gaz, comprenant une turbine ( 11 ) ayant une rangée ( 12 ) d'aubes mobiles et une couronne, formée de plusieurs segments de couronne disposés autour de la rangée ( 12 ) d'aubes mobiles, mise autour de la rangée (12) d'aubes mobiles,
dans laquelle la rangée (12) d'aubes mobiles est celle mise en aval des autres rangées d'aubes mobiles et
dans laquelle au moins un segment ( 13 ) de couronne comprend un corps ( 25 ) de segment de couronne ayant un côté ( 27 ) de gaz chaud, tourné à l'état monté vers un trajet ( 26 ) de gaz chaud, ainsi qu'un élément ( 14 ) d'insertion pour recouvrir l'évidement ( 23 ) d'un corps ( 25 ) de segment de couronne d'une turbine ( 11 ) d'une turbine ( 10 ) à gaz, dans laquelle le corps ( 25 ) de segment de couronne a un évidement ( 23 ) du côté ( 27 ) du gaz chaud et l'élément ( 24 ) d'insertion est disposé dans l'évidement ( 23 ),
dans laquelle l'élément ( 14 ) d'insertion a un côté ( 15 ) avant, de forme concave, et un côté ( 16 ) arrière ayant un profil ( 17 ) de côté arrière et le profil ( 17 ) de côté arrière correspond à une forme négative d'un profil ( 22 ) de l'évidement ( 23 ),
**caractérisée en ce que**
l'élément ( 14 ) d'insertion peut, lorsque le corps ( 25 ) du segment de couronne est à l'état monté dans la turbine, être mis dans le trajet ( 26 ) du gaz chaud et peut être mis ensuite sur le corps ( 25 ) du segment de couronne.

2. Turbine ( 10 ) à gaz suivant la revendication 1,
dans laquelle l'élément ( 14 ) d'insertion a au moins un conduit ( 21 ) allant du côté ( 15 ) avant au côté ( 16 ) arrière.

3. Turbine ( 10 ) à gaz suivant la revendication 2,
dans laquelle l'élément ( 14 ) d'insertion a, du côté ( 15 ) avant, au moins un affaissement ( 18 ) disposé coaxialement au conduit ( 21 ).

4. Turbine ( 10 ) à gaz suivant la revendication 2,
dans laquelle le conduit ( 21 ) a une bosse ( 24 ) sortante.

5. Turbine ( 10 ) à gaz suivant la revendication 4,
dans laquelle est disposé, dans le conduit ( 21 ), un axe ( 19 ), qui a une tête pénétrant dans la bosse.

6. Procédé de montage dans lequel on met un élément ( 14 ) d'insertion sur un évidement ( 23 ) d'un corps ( 25 ) de segment de couronne d'une turbine ( 11 ) d'une turbine ( 10 ) à gaz,
dans lequel l'évidement ( 23 ) est disposé d'un côté ( 27 ) de gaz chaud tourné, lorsque le corps ( 25 ) de segment de couronne est à l'état monté, vers un trajet ( 26 ) de gaz chaud de la turbine ( 10 ) à gaz, **caractérisé par** le stade suivant lequel on met l'élément ( 14 ) d'insertion, lorsque le corps ( 25 ) du segment de couronne est à l'état monté, dans le trajet ( 26 ) du gaz chaud et on le met ensuite sur le corps ( 25 ) du segment de couronne.
